# EUROPÄISCHE PATENTSCHRIFT

(11) **EP 2 488 361 B1**
(45) Veröffentlichungstag und Bekanntmachung des Hinweises auf die Patenterteilung: **09.07.2014**
(21) Anmeldenummer: 10768739.4
(22) Anmeldetag: 14.10.2010
(51) Int. Cl.: B32B 11/00, B32B 7/02, B32B 3/06, E04D 5/00, E04D 13/00, B32B 3/24, B32B 5/02, B32B 7/06

(54) **VERFAHREN ZUR HERSTELLUNG EINES MEHRLAGIGEN DICHTUNGSAUFBAUS MIT ELEKTRISCH LEITFÄHIGER INNENSCHICHT AUS BITUMENSCHWEISSBAHNEN UND BITUMENSCHWEISSBAHNEN FÜR EINEN SOLCHEN DICHTUNGSAUFBAU**
METHOD OF PRODUCING A MULTILAYERED SEALING ASSEMBLY WITH AN ELECTRICALLY CONDUCTIVE CORE LAYER FROM FUSIBLE BITUMINOUS SHEETS AND FUSIBLE BITUMINOUS SHEETS FOR SUCH SEALING ASSEMBLY
PROCÉDÉ DE PRODUCTION D'UN ASSEMBLAGE D'ÉTANCHÉITÉ MULTICOUCHE AYANT UNE COUCHE CENTRALE ÉLECTRIQUEMENT CONDUCTRICE UTILISANT DES BANDES BITUMINEUSES SOUDABLES ET BANDES BITUMINEUSES SOUDABLES POUR UN TEL ASSEMBLAGE D'ÉTANCHÉITÉ

(30) Priorität: 15.10.2009 DE 102009044261
(43) Veröffentlichungstag der Anmeldung: 22.08.2012
(73) Patentinhaber: Progeo Monitoring GmbH, 14979 Grossbeeren (DE)
(72) Erfinder: RÖDEL, Andreas, 14532 Kleinmachnow (DE)
(74) Vertreter: Cohausz & Florack
(86) Internationale Anmeldenummer: PCT/EP2010/065369
(87) Internationale Veröffentlichungsnummer: WO 2011/045354

(56) Entgegenhaltungen:
- EP-A1- 0 350 541
- WO-A1-01/31138

## Beschreibung

Die Erfindung betrifft ein Verfahren zur Herstellung eines mehrlagigen Dichtungsaufbaus aus Bitumenschweißbahnen, beispielsweise einer mehrlagigen Dachhaut oder Kellerabdichtung eines Gebäudes, mit elektrisch leitfähiger Innenschicht. Des Weiteren betrifft die Erfindung Bitumenschweißbahnen zur Herstellung eines solchen mehrlagigen Dichtungsaufbaus.

Flächige Abdichtungen für Bauwerke werden bis heute großenteils aus bahnenartigen Vorprodukten hergestellt, die dann auf der Baustelle zu vollflächigen Abdichtungssystemen verarbeitet werden. Die Abdichtungen haben dabei die Aufgabe, das Eindringen von Wasser in das Gebäude dauerhaft sicher zu verhindern. Beschädigungen der Abdichtung aufgrund von Verarbeitungsfehlern, sowie mechanischen, thermischen und teilweise chemischen Beanspruchungen während der Bau- und Nutzungsphase des Bauwerks führen zu schwerwiegenden Schäden an den Gebäuden. Bis heute sind zu spät erkannte und nicht lokalisierbare Abdichtungsschäden die Hauptursache für Bauwerksschäden.

Um die Risiken aus Schäden an Bauwerksabdichtungen besser beherrschen zu können, dies insbesondere dadurch, dass Leckagen an Bauwerksabdichtungen frühzeitig erkannt und mit möglichst hoher Genauigkeit geortet werden können, werden heute spezielle Diagnose- und Kontrollsysteme für die Überwachung von Bauwerkabdichtungen eingesetzt. Grundlage dieser Systeme ist die Überwachung des Isolationswiderstandes der Abdichtung. Dabei wird ausgenutzt, dass die Abdichtungsmaterialien, z.B. Bitumenmassen oder Kunststoffe wie z.B. PVC oder Polyolefine in aller Regel elektrische Nichtleiter sind. Wird eine solche Abdichtung punktuell z.B. infolge einer Beschädigung undicht, so entsteht über die eindringende Leckageflüssigkeit eine elektrisch zumindest geringfügig leitende Verbindung zwischen der nassen Dichtungsaußenseite und der Dichtungsinnenseite, über die bei Vorliegen weiterer Voraussetzungen dann ein elektrischer Strom durch die Leckagestelle hindurch fließt, was von der Kontrollvorrichtung in geeigneter Weise erfasst und als Leckageereignis bewertet wird.

Um eine vollflächige und damit sichere Erkennung von Leckagen zu ermöglichen, wird in aller Regel unterhalb der zu überwachenden Abdichtung eine elektrisch leitfähige Kontaktlage vollflächig angeordnet. Dringt Wasser durch eine Leckagestelle in der Abdichtung, so trifft die Leckageflüssigkeit auf ihrem Weg in das Gebäude zwangsläufig zuerst immer auf die Kontaktlage unterhalb der Abdichtung und der elektrische Messkreis ist geschlossen. Auf diese Weise können bereits sehr kleine Leckageereignisse sehr frühzeitig detektiert werden.

Voraussetzung für ein sicheres Funktionieren solcher Systeme ist, dass die Kontaktlage unterhalb der Abdichtung so angeordnet ist, dass keine elektrische Verbindung zur Gebäudemasse besteht, da dies zu elektrischen Nebenschlüssen im Messkreis und damit zu einer Verfälschung der Messergebnisse führen würde. Die günstigsten Voraussetzungen ergeben sich insoweit, wenn die elektrische Kontaktlage nicht unterhalb der Abdichtung z.B. auf einer Wärmedämmung sondern innerhalb der Abdichtung oder eines Abdichtungssystems selbst angeordnet ist und zumindest bei intakter Abdichtung beidseitig durch eine umgebende Schicht von isolierendem Dichtungsmaterial vollständig von der Umgebung abgeschirmt wird. Diese Voraussetzungen sind insbesondere bei bituminösen Abdichtungssystemen gegeben, da diese in aller Regel als mindestens zweilagige Dichtungsaufbauten herzustellen sind, so dass im Zuge der Herstellung des Abdichtungssystems die Kontaktlage zwischen unterer und oberer Dichtungslage eingebettet werden kann.

Hierzu wird auf eine untere Dichtungslage, die aus miteinander an den Nähten durch Warmgasschweißen verbundenen Bitumendichtungsbahnen besteht, eine leitfähige Kontaktlage z.B. aus überlappend verlegten elektrisch leitfähigen Glasvliesbahnen ausgebracht. Diese wird dann mit einer weiteren Dichtungslage aus mit einander verschweißten Bitumenbahnen als zweiter Dichtungslage abgedeckt. Auf diese Weise wird eine vollständige Isolierung der Kontaktlage gegenüber der Umgebung erreicht.

Nach einschlägigem Regelwerk müssen bei mehrlagigen bituminösen Abdichtungssystemen die einzelnen Dichtungslagen vollflächig miteinander verbunden werden. Hierdurch soll verhindert werden, dass bei einer Leckage in der oberen Dichtungslage Wasser zwischen die Dichtungslagen eindringt und sich dort anreichert. Weiterhin dient die vollflächige Verbindung zur sicheren Übertragung von auf die obere Dichtungslage einwirkenden Windsogkräften in die Dachkonstruktion.

Um das Ziel eines vollflächigen Klebeverbundes zu erreichen, muss also die elektrisch leitfähige Kontaktlage vollflächig und ohne dass sich ein Kapillarraum bildet mit der unteren und oberen Dichtungslage verbunden sein. Nur so wird den fachtechnischen Anforderungen an den Dichtungsaufbau genüge getan. Diese vollflächige Verklebung des Schichtenaufbaus wird in der Praxis bisher auf unterschiedliche Weise erreicht:
Bei einer Verarbeitung der Kontaktlage im Gieß- und Einrollverfahren wird die zunächst lose auf der unteren Dichtungslage ausgelegte Kontaktlage aus elektrisch leitfähigem Glasvlies mit Heißbitumen übergossen, so dass das Glasvlies vollständig mit Heißbitumen durchtränkt und dabei mit der unteren Dichtungslage verklebt wird. In das noch flüssige Heißbitumen wird dann unmittelbar die obere Dichtungslage eingerollt und so ebenfalls vollflächig verklebt. Alternativ dazu wird mit dem Heißbitumen nur ein so genannter Heißabstrich hergestellt, wodurch das elektrisch leitfähige Glasvlies vollflächig auf die untere Dichtungslage aufgeklebt und der Kapillarraum des Vlieses geschlossen wird. In einem zweiten Arbeitsgang wird dann die obere Dichtungslage aus Bitumenschweißbahnen auf den erkalteten Heißabstrich vollflächig aufgeschweißt. Letztlich erfolgt die Verarbeitung heute häufig dergestalt, dass das elektrisch leitfähige Glasvlies in die mit dem Warmgasbrenner angeschmolzene untere Dichtungslage eingerollt wird, wobei das Glasvlies bereits weitgehend mit der aufgeschmolzenen Bitumenmasse durchtränkt wird. Anschließend wird die obere Schweißbahnenlage auf das Glasvlies aufgeschweißt, wobei noch offene Faserstrukturen des Vlieses durch in der Schweißzone verflüssigte Bitumenmasse der oberen Dichtungslage durchtränkt werden und so eine vollflächige, kapillarfreie Verklebung der Kontaktlage erfolgt.

Nachteil dieser Verarbeitungsverfahren ist, dass die Einarbeitung der Kontaktlage in das Abdichtungssystem einen zusätzliche Arbeitsschritt darstellt, der erheblichen Zeitaufwand und damit Kosten verursacht und der in der erreichten Ausführungsqualität, insbesondere was den Grad der vollflächigen Verklebung anbetrifft, nur bedingt gesteuert und kontrolliert werden kann.

Der vorliegenden Erfindung liegt die Aufgabe zugrunde, ein Verfahren zur Herstellung eines zwei- oder mehrlagigen vollflächig verklebten Dichtungsaufbaus aus Bitumenschweißbahnen mit integrierter vollflächiger Kontaktlage bereitzustellen, das ohne die Nachteile eines zusätzlichen zeit- und kostenträchtigen Verarbeitungsgangs für die Herstellung der Kontaktlage auf der Baustelle und einer unbefriedigenden Steuerungsmöglichkeit der Ausführungsqualität der vollflächigen Verklebung der einzelnen Systemschichten auskommt.

Gelöst wird diese Aufgabe durch ein Verfahren mit den Merkmalen des Anspruchs 1 und durch Bitumenschweißbahnen mit den Merkmalen des Anspruchs 11.

Das erfindungsgemäße Verfahren ist dadurch gekennzeichnet, dass zur Herstellung eines mehrlagigen Dichtungsaufbaus aus Bitumenschweißbahnen mit elektrisch leitfähiger Innenschicht Bitumenschweißbahnen verwendet werden, die jeweils bereits werksmäßig (werkseitig) mit einer elektrisch leitfähigen Beschichtung versehen sind, wobei die Beschichtung
a) mit Abstand zu mindestens einer der Längskanten und mindestens einer der Querkanten der Bitumenschweißbahn endet oder
b) lösbar mit der Bitumenschweißbahn verklebt ist, wobei mindestens ein Querrand der lösbar mit der Bitumenschweißbahn verklebten Beschichtung am Einbauort der Bitumenschweißbahnen entfernt wird,
so dass die jeweilige Bitumenschweißbahn nicht leitfähige Randstreifen als Überlappungs- und Fügebereich für in derselben Dichtungslage anzuordnende jeweils benachbarte Bitumenschweißbahnen aufweist. Aus solchermaßen ausgerüsteten Bitumenschweißbahnen wird eine untere Dichtungslage mit nach oben weisenden elektrisch leitfähigen Beschichtungssegmenten gebildet, die aber miteinander elektrisch noch nicht in Verbindung stehen. Erfindungsgemäß werden die einzelnen leitfähigen Beschichtungssegmente der die untere Dichtungslage bildenden Bitumenschweißbahnen nun dadurch elektrisch verbunden, dass die Bitumenschweißbahnen, welche die darauf folgende obere Dichtungslage bilden, mit nach unten weisender leitfähiger Seite so auf die untere Dichtungslage aufgebracht werden, dass die oberen Bitumenschweißbahnen relativ zu den unteren Bitumenschweißbahnen so weit längs und/oder quer versetzt angeordnet werden, dass die elektrisch leitfähigen Beschichtungen der jeweils oberen Bitumenschweißbahnen die Verbindungsnähte der unteren Bitumenschweißbahnen überdecken und auf diese Weise jeweils benachbarte leitfähige Beschichtungssegmente der unteren Dichtungslage miteinander kontaktieren, so dass insgesamt eine im Wesentlichen vollflächige elektrisch leitfähige Schicht innerhalb des Dichtungsaufbaus entsteht.

Dank der Erfindung ist es somit nicht mehr erforderlich, den Arbeitsschritt für die Herstellung der elektrisch leitfähigen Kontaktlage auf der Baustelle durchzuführen. Hierdurch kann die Fertigstellung eines entsprechenden Dichtungsaufbaus verkürzt werden. Dementsprechend verringern sich die baustellenbezogenen Arbeitskosten für die Herstellung des Dichtungsaufbaus. Die werksseitige Ausrüstung der Bitumenschweißbahnen mit der elektrisch leitfähigen Beschichtung erfolgt vorzugsweise maschinell, so dass sich eine hohe und gleichmäßige Ausführungsqualität der stoffschlüssigen Verbindung zwischen Bitumenschweißbahn und leitfähiger Beschichtung erzielen lässt. Die werksmäßige, maschinelle Ausrüstung der Bitumenschweißbahnen mit einer elektrisch leitfähigen Beschichtung bietet die Möglichkeit, mehrlagige Dichtungsaufbauten mit elektrisch leitfähiger Innenschicht zu geringeren Gesamtkosten herzustellen.

Eine vorteilhafte Ausgestaltung der Erfindung besteht darin, dass zur Herstellung des Dichtungsaufbaus Bitumenschweißbahnen verwendet werden, die jeweils werksmäßig mit einer elektrisch leitfähigen Beschichtung versehen sind, die eine Vielzahl rasterartig oder unregelmäßig verteilt ausgebildeter Durchbrechungen aufweist oder bei Erhitzung unter Bildung einer regelmäßigen oder auch unregelmäßigen Netzstruktur aufreißt, so dass in der Beschichtung eine Vielzahl regelmäßig oder unregelmäßig verteilt ausgebildeter Durchbrechungen entstehen. Auf diese Weise kann sichergestellt werden, dass nach thermischer Aktivierung mit den üblichen Verarbeitungsgeräten (z.B. einem Gasbrenner) und anschließendem Aufrollen und Andrücken der oberen Dichtungslage auf die untere Dichtungslage die miteinander zu verbindenden Oberflächen der elektrisch leitfähigen Beschichtungen (Schichtsegmente) elektrisch zumindest partiell miteinander kontaktieren, wobei die zu verbindenden Oberflächen gleichzeitig weitestgehend vollflächig miteinander verkleben und so einen weitgehend vollflächigen Verbund miteinander eingehen.

Ein weitgehend vollflächiger Verbund zwischen der oberen Dichtungslage auf die untere Dichtungslage lässt sich zuverlässig erzielen, wenn gemäß einer bevorzugten Ausgestaltung der Erfindung zur Herstellung des Dichtungsaufbaus Bitumenschweißbahnen verwendet werden, die jeweils werksmäßig mit einer elektrisch leitfähigen Beschichtung versehen sind, die aus einem eine Vielzahl von Durchbrechungen aufweisenden elektrisch leitfähigen Flächengebilde besteht. Das Flächengebilde wird dabei vorzugsweise aus einem elektrisch leitfähigen Vlies, Gewebe und/oder Gitter gebildet.

Um einerseits eine zuverlässige Verbindung zwischen der jeweiligen Bitumenschweißbahn und dem elektrisch leitfähigen Flächengebilde zu erzielen, und andererseits auf einfache Weise eine einwandfreie elektrische Verbindung der elektrisch leitfähigen Flächengebilde der Bitumenschweißbahnen der unteren Dichtungslage mit den elektrisch leitfähigen Flächengebilden der Bitumenschweißbahnen der oberen Dichtungslage zu ermöglichen, sieht eine weitere Ausgestaltung der Erfindung vor, dass das Flächengebilde werksseitig so auf die jeweilige Bitumenschweißbahn aufgebracht wird, dass zumindest ein Teil der Durchbrechungen mit Bitumenmasse gefüllt ist, ohne dass die der Bitumenschweißbahn abgewandte Seite des Flächengebildes mit Bitumenmasse überdeckt ist.

Vorzugsweise werden zum einen das Flächengebilde hinsichtlich Dicke und Durchtränkbarkeit und zum anderen die in der Verschweißungszone der Bitumenschweißbahnen verwendete Bitumenmasse so aufeinander abgestimmt, dass eine vollflächige Durchtränkung des Flächengebildes in der Verschweißungszone bei der Herstellung des Dichtungsaufbaus in Folge Erhitzung und Anpressung einer der oberen Bitumenschweißbahnen erreicht wird.

Eine andere vorteilhafte Ausgestaltung der Erfindung besteht darin, dass zur Herstellung des Dichtungsaufbaus Bitumenschweißbahnen verwendet werden, die jeweils werksmäßig mit einer elektrisch leitfähigen Beschichtung versehen sind, die werksmäßig aus auf die jeweilige Bitumenschweißbahn aufgebrachten elektrisch leitfähigen Fasern und/oder elektrisch leitfähigen Partikeln hergestellt wird, wobei die Fasern und/oder Partikel mit der Bitumenschweißbahn thermisch verbunden werden, und wobei die Belegungsdichte der Bitumenschweißbahn mit Fasern und/oder Partikeln so hoch gewählt wird, dass über den Kontakt der elektrisch leitfähigen Fasern und/oder Partikel untereinander insgesamt eine elektrisch leitfähige Schicht entsteht. Die Herstellung der elektrisch leitfähigen Beschichtung aus elektrisch leitfähigen Fasern und/oder elektrisch leitfähigen Partikeln verzichtet in diesem Fall auf die Herstellung eines leitfähigen Vlieses oder Gewebes aus entsprechenden Fasern. Durch Wegfall dieses Herstellungsvorgangs können die Gesamtkosten für die Herstellung eines Dichtungsaufbaus der genannten Art mitunter weiter verringert werden.

Eine weitere vorteilhafte Ausgestaltung der Erfindung besteht darin, dass zur Herstellung des Dichtungsaufbaus Bitumenschweißbahnen verwendet werden, die jeweils werksmäßig mit einer elektrisch leitfähigen Beschichtung in Form einer dünnen elektrisch leitfähigen Kunststofffolie versehen sind, die bei der Herstellung des Dichtungsaufbaus in Folge Erhitzung zunächst plastifiziert wird und anschließend unter Bildung einer regelmäßigen oder unregelmäßigen Netzstruktur aufreißt, wobei die in den Netzöffnungen befindliche Bitumenmasse schmilzt.

Bei dieser Ausgestaltung entfällt ein zusätzlicher Perforierungsvorgang zur Erzeugung von Durchbrechungen für einen unmittelbaren stoffschlüssigen Verbund der unteren und oberen Bitumenschweißbahnen. Die Perforierung der jeweiligen elektrisch leitfähigen Kunststofffolie bzw. die Erzeugung der Durchbrechungen in der Kunststofffolie erfolgt vielmehr während der Verarbeitung der erfindungsgemäßen Bitumenschweißbahnen auf der Baustelle.

Alternativ sieht die Erfindung nach einer weiteren Ausgestaltung vor, dass zur Herstellung des Dichtungsaufbaus Bitumenschweißbahnen verwendet werden, die jeweils werksmäßig mit einer elektrisch leitfähigen Beschichtung in Form einer elektrisch leitfähigen Kunststofffolie versehen sind, die in einem regelmäßigen Raster oder in unregelmäßiger Verteilung Perforationen aufweist. Die elektrisch leitfähige Kunststofffolie wird dabei vorzugsweise werksseitig so auf die Bitumenschweißbahn aufgebracht, dass die Kunststofffolie nur partiell in einer gitter- oder rasterartigen Struktur mit der Bitumenschweißbahn verbunden ist und im übrigen Bereich nicht oder nur leicht an der Bitumenschweißbahn haftet.

Die erfindungsgemäßen Bitumenschweißbahnen zur Herstellung eines mehrlagigen Dichtungsaufbaus, insbesondere einer mehrlagigen Dachhaut eines Gebäudes, sind durch eine auf der jeweiligen Bitumenschweißbahn angeordnete elektrisch leitfähige Beschichtung gekennzeichnet, die mit Abstand zu mindestens einer der Längskanten und mindestens einer der Querkanten der Bitumenschweißbahn endet oder lösbar mit der Bitumenschweißbahn verklebt ist, wobei mindestens ein Querrand der lösbar mit der Bitumenschweißbahn verklebten Beschichtung am Einbauort der Bitumenschweißbahnen entfernbar ist, so dass die jeweilige Bitumenschweißbahn nicht leitfähige Randstreifen als Überlappungs- und Fügebereich für in derselben Dichtungslage anzuordnende Bitumenschweißbahnen aufweist, und wobei die elektrisch leitfähige Beschichtung der jeweiligen Bitumenschweißbahn aus
a) einem eine Vielzahl von Durchbrechungen aufweisenden elektrisch leitfähigen Flächengebilde gebildet ist, wobei das Flächengebilde aus einem elektrisch leitfähigen Vlies, Gewebe und/oder Gitter gebildet ist, oder
b) auf die jeweilige Bitumenschweißbahn aufgebrachten elektrisch leitfähigen Fasern und/oder elektrisch leitfähigen Partikeln hergestellt ist, wobei die Fasern und/oder Partikel mit der Bitumenschweißbahn stoffschlüssig verbunden sind, oder
c) einer dünnen elektrisch leitfähigen Kunststofffolie gebildet ist, die bei der Herstellung des Dichtungsaufbaus in Folge Erhitzung zunächst plastifiziert wird und anschließend unter Bildung einer unregelmäßigen Netzstruktur aufreißt, wobei die in den Netzöffnungen befindliche Bitumenmasse schmilzt, oder
d) einer elektrisch leitfähigen Kunststofffolie gebildet ist, die in einem regelmäßigen Raster oder in unregelmäßiger Verteilung Perforationen aufweist.

Vorzugsweise sind die erfindungsgemäßen Bitumenschweißbahnen so ausgebildet, dass die elektrisch leitfähige Beschichtung mit Abstand zu beiden Längskanten und beiden Querkanten der Bitumenschweißbahn endet bzw. zwei mit der Bitumenschweißbahn lösbar verklebte Längsränder und zwei mit der Bitumenschweißbahn lösbar verklebte Querränder aufweist, wobei die Längsränder und die Querränder am Einbauort der Bitumenschweißbahn von dieser entfernt werden, so dass die Bitumenschweißbahn einen umlaufenden, nicht leitfähigen Randstreifen als Überlappungsbereich für in derselben Dichtungslage anzuordnende Bitumenschweißbahnen aufweist. Diese Ausgestaltung bietet ein Höchstmaß an Flexibilität bei der Verarbeitung der Bitumenschweißbahnen. Zudem können auf diese Weise der Materialverbrauch und damit die Materialkosten für die elektrisch leitfähige Beschichtung minimiert werden.

Weitere bevorzugte und vorteilhafte Ausgestaltungen der erfindungsgemäßen Bitumenschweißbahnen sind in den Unteransprüchen angegeben.

Nachfolgend wird die Erfindung anhand einer mehrere Ausführungsbeispiele darstellenden Zeichnung näher erläutert. Es zeigen in schematisch:
- Fig. 1a: eine Draufsicht auf ein erstes Ausführungsbeispiel einer erfindungsgemäßen Bitumenschweißbahn mit einer werksmäßig aufgebrachten elektrisch leitfähigen Schicht;
- Fig. 1b: eine Draufsicht auf ein zweites Ausführungsbeispiel einer erfindungsgemäßen Bitumenschweißbahn;
- Fig. 1c: eine Draufsicht auf ein drittes Ausführungsbeispiel einer erfindungsgemäßen Bitumenschweißbahn mit einer werksmäßig aufgebrachten elektrisch leitfähigen Schicht, die mit der Bitumenschweißbahn lösbar verklebt ist;
- Fig. 1d: eine perspektivische Darstellung einer Bitumenschweißbahn gemäß Fig. 1c mit einem teilweise entfernten streifenförmigen Querrand der elektrisch leitfähigen Schicht;
- Fig. 1e: einen Abschnitt einer Bitumenschweißbahn gemäß Fig. 1c in vergrößerter perspektivischer Ansicht;
- Fig. 2: mehrere miteinander verbundene, einen Abschnitt einer unteren Lage eines mehrlagigen Dichtungsaufbaus bildende erfindungsgemäße Bitumenschweißbahnen, in perspektivischer Ansicht; und
- Fig. 3: einen Abschnitt eines Dichtungsaufbaus aus Bitumenschweißbahnen gemäß Fig. 1a, in Vertikalschnittansicht entsprechend der Schnittlinie III - III der Fig. 2.

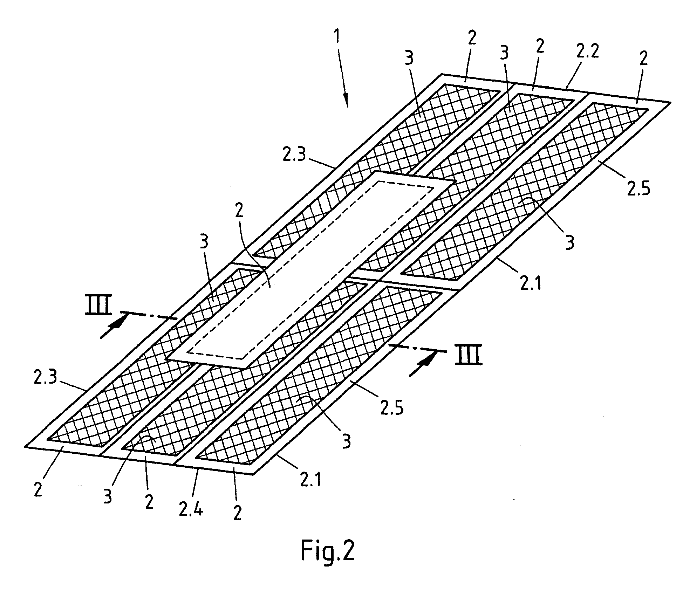

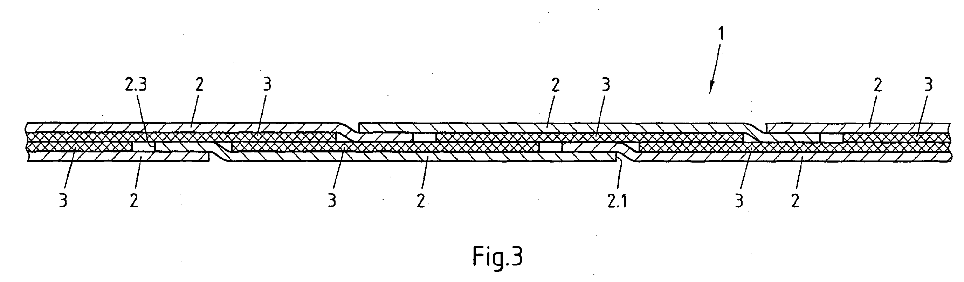

Die untere und obere Dichtungsbahnenlage eines flächigen Dichtungsaufbaus 1 (vgl. Figuren 2 und 3) bestehen aus Bitumenschweißbahnen 2 in den heute üblichen Formaten, zum Beispiel mit einer Breite der einzelnen Bahnen von ca. 1,0 m und einer Länge von z.B. ca. 7,5 m aus den heute üblichen Bitumenmassen. Anstelle der üblichen Folierung oder Vlieskaschierung, mit denen ein Verkleben der im Anlieferungszustand aufgerollten Bahnen 2 vermieden wird, sind die im Rahmen der Verarbeitung miteinander zu verschweißenden Oberflächen der unteren und der oberen Dichtungslage erfindungsgemäß bereits werkseitig jeweils mit einer elektrisch leitfähigen Beschichtung (Schicht) 3 ausgerüstet. Die leitfähige Beschichtung (Schicht) 3 ist dabei an mindestens einer Längsseite 2.1 und einer Querseite 2.2 der jeweiligen Bitumenschweißbahn, vorzugsweise an beiden Längs- und Querseiten 2.1, 2.3 bzw. 2.2, 2.4 nicht bis an den Bahnenrand geführt, sondern von diesem jeweils ein Stück weit beabstandet, wobei die Breite des oder der nicht leitfähig ausgerüsteten Randstreifen(s) 2.5 vorzugsweise die Breite der typischerweise bei der Nahtverschweißung einzuhaltenden Bahnenüberlappung aufweist. Auf diese Weise wird erreicht, dass sich eine einwandfreie Schweißnaht ausbilden kann, ohne dass die Verschweißung durch in der Nahtzone liegende Bestandteile der elektrisch leitfähigen Schicht 3 behindert wird. Weiterhin wird verhindert, dass die elektrisch leitfähigen Schichtsegmente an Nähten aus dem Schichtensystem austreten können und es so z.B. zu elektrischen Nebenschlüssen gegen Gebäudemasse kommt. Diese Gefahr besteht insbesondere, wenn die leitfähigen Schichten 3 bis an den Rand des flächigen Dichtungsaufbaus 1 geführt würden. Die jeweilige leitfähige Schicht 3 ist in der Zeichnung durch eine Kreuzschraffur kenntlich gemacht.

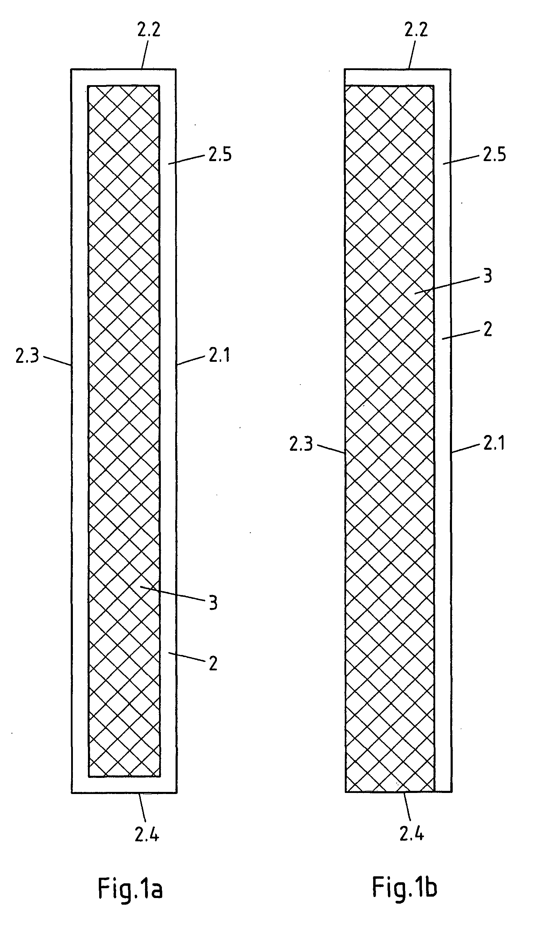

In den Fig. 1a und 1b sind erfindungsgemäße Bitumenschweißbahnen 2 zur Herstellung eines mehrlagigen Dichtungsaufbaus 1 dargestellt, die jeweils einseitig mit einer elektrisch leitfähigen Beschichtung 3 ausgerüstet sind. Während die leitfähige Beschichtung 3 bei dem Ausführungsbeispiel gemäß Fig. 1a mit Abstand zu beiden Längskanten 2.1, 2.3 und beiden Querkanten 2.2, 2.4 der Bitumenschweißbahn 2 endet, so dass die Bitumenschweißbahn 2 einen umlaufenden, nicht leitfähigen Randstreifen 2.5 als Überlappungsbereich für in derselben Dichtungslage anzuordnende Bitumenschweißbahnen 2 aufweist, ist bei dem in Fig. 1b dargestellten Ausführungsbeispiel die leitfähige Beschichtung 3 bis an eine (2.3) der beiden Längskanten sowie an eine (2.4) der beiden Querkanten der Bitumenschweißbahn 2 herangeführt, im Übrigen aber zu der anderen Längskante 2.1 und der anderen Querkante 2.2 beabstandet, so dass sich ein L-förmiger, nicht leitfähiger Randstreifen 2.5 als Überlappungsbereich für in derselben Dichtungslage anzuordnende Bitumenschweißbahnen 2 ergibt.

Die elektrisch leitfähige Beschichtung 3 der erfindungemäßen Bitumenschweißbahn 2 besteht aus einem elektrisch leitfähigen Flächengebilde in Form eines Vlieses, Gewebes oder Gitters, einer elektrisch leitfähigen Kunststofffolie oder einer aus elektrisch leitfähigen Fasern und/oder elektrisch leitfähigen Partikeln gebildeten Beschichtung.

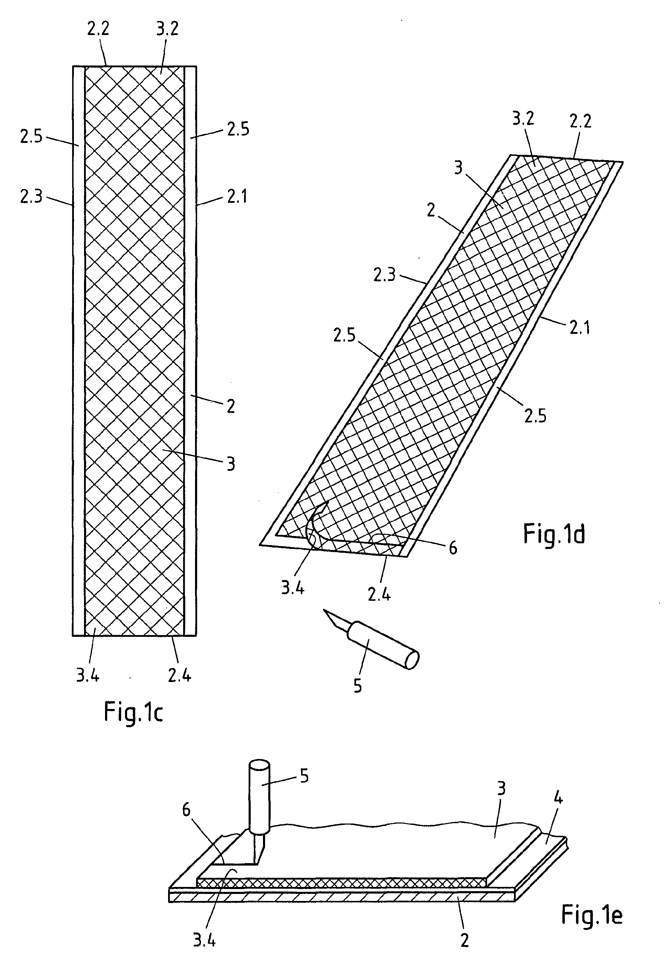

Die in Fig. 1c dargestellte erfindungsgemäße Bitumenschweißbahn 2 weist ebenfalls eine werksmäßig (werksseitig) aufgebrachte elektrisch leitfähige Schicht (Beschichtung) 3 auf. Im Unterschied zu den in den Figuren 1a und 1b gezeigten Ausführungsbeispielen sind hier jedoch im Bereich des Querrandes bzw. der Querränder 3.2, 3.4 der nicht leitfähige Randstreifen 2.5, der als Überlappungs- und Fügebereich für in derselben Dichtungslage anzuordnende benachbarte Bitumenschweißbahnen dient, nicht bereits werksmäßig hergestellt, sondern werden erst im Rahmen der Baustellenverarbeitung von leitfähigem Schichtmaterial befreit.

Um das Entfernen der störenden Bereiche der leitfähigen Beschichtung 3 von der Bitumenschweißbahn 2 zu erleichtern, ist die Schicht 3 vorzugsweise aus einer elektrisch leitfähigen Kaschierfolie gebildet, die im Werk nur mit einer relativ leichten Haftklebung auf die Bitumenschweißbahn 2 aufgebracht wird und sich erst beim Verschweißen mittels eines Brenners auf der Baustelle unlösbar mit der Bitumenschweißbahn 2 verbindet. Vor dem Aufbringen der leitfähigen Beschichtung bzw. Folie 3 wird die Bitumenschweißbahn 2 allerdings mit einer dünnen Kunststofffolie 4 als Schutzfolie, beispielsweise einer LDPE-Folie vollflächig kaschiert, da sich bei einem direkten Aufbringen der elektrisch leitfähigen Folie 3 in das produktionsfrische Bitumen die Folie 3 unlösbar mit dem Bitumen verbinden würde. Das Aufbringen der leitfähigen Schicht bzw. Folie 3 erfolgt daher werkseitig erst zu einem Zeitpunkt bzw. an einer Stelle, zu dem bzw. an der die fertige Bitumenschweißbahn 2 ausreichend verfestigt und abgekühlt ist, und dort nicht direkt auf das Bitumen sondern auf die dünne Schutzfolie 4.

Durch diese Vorgehensweise wird sichergestellt, dass die störenden Bereiche der elektrisch leitfähigen Schicht 3 vor dem Verschweißen leicht von der Bitumenschweißbahn 2 abgezogen werden können. Auf diese Weise können nicht nur Querränder der elektrisch leitfähigen Schicht bzw. Folie 3 entfernt werden, sondern gegebenenfalls auch störende Bereiche der elektrisch leitfähigen Schicht 3 an sonstigen Schnittkanten und Durchführungspunkten, zum Beispiel an einer Öffnung für ein Dunstabzugsrohr. Das Entfernen störender Bereiche der leitfähigen Schicht bzw. Folie 3, zum Beispiel eines Querrandes 3.4 und/oder eines Längsrandes, lässt sich einfach und recht schnell durchführen, indem man die leitfähige Schicht bzw. Folie 3 zunächst mit einem Messer 5 oder einem anderen geeigneten Schneidwerkzeug leicht entlang der betreffenden Kante der Bitumenschweißbahn 2 einritzt und dann den durch den Ritz oder Schnitt 6 vorgegebenen Streifen 3.4 der Schicht bzw. Folie 3 abzieht.

Technisch lässt sich dies realisieren, zum Beispiel indem eine elektrisch leitfähige Folie 3 oder ein Flächengebilde 3 aus einem elektrisch leitfähigen Vlies, Gewebe und/oder Gitter unter Verwendung eines eine geringe Klebkraft aufweisenden Sprühheißklebers über eine Vielzahl von kleinen Klebpunkten auf die Schutzfolie 4 aufgeklebt wird, die später beim vollflächigen Verschweißen der Bitumenschweißbahn 2 mit dem plastifizierten Bitumen eine hohe Klebkraft entwickeln. Diesbezüglich sind aber auch andere Varianten denkbar, z.B. auch eine Verklebung durch eine Heißbitumensprühklebung.

Im Herstellungswerk, in welchem die Bitumenschweißbahn 2 produziert wird, wird die elektrisch leitfähige Folie bzw. Schicht 3 vorzugsweise kontinuierlich mit geringerer Breite als die Bitumenschweißbahn 2 auf dieselbe bzw. die Schutzfolie 4 lösbar aufgeklebt, so dass sich in Längsrichtung der Bitumenschweißbahn 2 mindestens ein einzelner oder vorzugsweise zwei nicht leitende Randstreifen 2.5 ergeben (vgl. Fig. 1c).

Nach Entfernen bzw. Abziehen eines Querrandes 3.2 oder 3.4 oder beider Querränder 3.2, 3.4 der elektrisch leitfähigen Schicht 3 entspricht die in den Figuren 1e und 1d dargestellte Bitumenschweißbahn dann der in Fig. 1a oder Fig. 1b dargestellten Bitumenschweißbahn 2 mit L-förmigen bzw. umlaufenden nicht leitfähigem Randstreifen 2.5.

Wird die untere Dichtungslage eines mehrlagigen Dichtungsaufbaus 1 aus solchermaßen mit leitfähigen Schichten 3 ausgerüsteten Bitumenbahnen 2 hergestellt, so besteht die Oberfläche einer dann fertig gestellten unteren Dichtungslage zunächst noch nicht aus einer vollflächigen elektrisch leitfähigen Schicht, denn die einzelnen leitfähigen Oberflächensegmente (Beschichtungen) 3 der miteinander verschweißten Bahnen 2 stehen noch nicht in elektrischer Verbindung miteinander. Diese elektrische Verbindung zwischen den einzelnen leitfähigen Schichtsegmenten 3 wird erfindungsgemäß erst dadurch erreicht, dass nun die obere Dichtungslage auf die untere Dichtungslage aufgebracht wird, wobei die unteren und oberen Dichtungsbahnen 2 in ihrer Lage längs und quer so weit versetzt zueinander angeordnet werden, dass die leitfähigen Schichtsegmente 3 der jeweils oberen Bahnen 2, die erfindungsgemäß der unteren Dichtungslage zugewandt sind, die Nahtverbindungen der unteren Dichtungsbahnen 2 überdecken und so die zunächst noch elektrisch von einander getrennten leitfähigen Segmente 3 der unteren Bahnen 2 elektrisch miteinander verbinden, so dass im Endergebnis eine im Wesentlichen vollflächige und unterbrechungsfreie elektrisch leitfähige Schicht innerhalb des Dichtungsaufbaus 1 entsteht. In Fig. 2 sind sechs mit einander verschweißte Bitumenschweißbahnen 2 gezeigt, die die untere Dichtungslage eines mehrlagigen Dichtungsaufbaus 1 bilden. Von der oberen Dichtungslage des mehrlagigen Dichtungsaufbaus 1 ist der Übersichtlichkeit wegen nur eine einzige Bitumenschweißbahn 2 dargestellt, deren leitfähige Beschichtung der unteren Dichtungslage zugewandt ist (vgl. auch Fig. 3).

Um eine zuverlässige stoffschlüssige Verbindung zwischen unterer und oberer Dichtungslage sicherzustellen, ohne dass deren Ausbildung durch die in der Kontaktzone bzw. Klebezone zwischen unterer und oberer Dichtungslage befindlichen leitfähigen Schichtsegmente 3 behindert wird, werden die leitfähigen Schichtsegmente 3 erfindungsgemäß so ausgebildet, dass nach thermischer Aktivierung mit Gasbrennern oder anderen geeigneten Verarbeitungsgeräten und anschließendem Aufrollen und Andrücken der oberen Dichtungslage auf die untere Dichtungslage die miteinander zu verbindenden Oberflächen der leitfähigen Schichtsegmente 3 elektrisch zumindest partiell miteinander kontaktieren, wobei die zu verbindenden Oberflächen gleichzeitig möglichst vollflächig miteinander verkleben und so einen weitgehend vollflächigen Verbund miteinander eingehen.

Gemäß einer bevorzugten Ausgestaltung der Erfindung wird diese Art der Verbindung beispielsweise dadurch erreicht, dass die werkseitig auf die Dichtungsbahnen 2 aufgebrachten elektrisch leitfähigen Beschichtungen (Schichtsegmente) 3 aus einem elektrisch leitfähigem Flächengebilde, z.B. einem elektrisch leitfähigen Vlies, Gewebe und/oder Gitter gebildet werden, wobei das Flächengebilde 3 dergestalt auf die Oberfläche der Bitumenbahnen 2 aufgebracht wird, dass die Zwischenräume des Flächengebildes 3 sodann bereits weitgehend mit Bitumenmasse ausgefüllt sind, ohne dass die Oberfläche des Flächengebildes 3 zumindest in Teilen bereits von Bitumenmasse überdeckt wird. Werden nun im Rahmen der üblichen Verarbeitungsweise die zu verbindenden Oberflächen mit einer Brennerflamme oder mit Heißgas erhitzt, so wird erfindungsgemäß die in den Zwischenräumen der Flächengebilde 3 befindliche Bitumenmasse plastifiziert und klebfähig. Wird nun eine erfindungsgemäße Bitumenschweißbahn 2 auf die untere, aus entsprechenden Bitumenschweißbahnen 2 hergestellten Dichtungslage abgerollt, so kontaktieren erfindungsgemäß in der Fügezone zunächst die oberflächig noch frei liegenden Flächengebilde miteinander, wobei dann beim weiteren Andrücken der oberen Bitumenbahn 2 auf die untere Dichtungslage das plastifizierte bzw. geschmolzene Bitumen durch den Anpressdruck von unten und oben in die Fügezone eintritt und dort zu einer innigen Verklebung der Schichten 3 in der Fügezone führt. Dabei werden möglicherweise noch vorhandene Hohlräume in der Fügezone ausreichend weitgehend mit schmelzflüssiger Bitumenmasse ausgefüllt und die leitfähigen Schichten 3 werden hinreichend vollständig in Bitumenmasse eingebettet.

Das Flächengebilde ist hinsichtlich seiner Dicke und Durchtränkbarkeit mit der in der Verschweißungszone verwendeten Bitumenmasse so aufeinander abgestimmt, dass eine vollständige Durchtränkung des Flächengebildes 3 in der Verschweißungszone bei der Verarbeitung in Folge der Erwärmung und des Anpressdrucks erreicht wird, ohne dass das Flächengebilde 3 bei der Kaschierung der Bitumenschweißbahn 2 bereits bis an die Oberfläche mit Bitumenmasse gefüllt werden muss, wodurch die werkmäßige Herstellung vereinfacht wird und ein Verkleben der als Rollware angelieferten Bitumenschweißbahnen während der Lagerung und des Transportes verhindert wird.

In einer weiteren Ausgestaltung der Erfindung wird anstelle der Verwendung eines elektrisch leitfähigen Flächengebildes 3 die elektrisch leitfähige Oberfläche der Bitumenschweißbahnen 2 werkmäßig durch Aufbringen von leitfähigen Fasern und/oder leitfähigen Partikeln hergestellt, wobei die Belegungsdichte der Bahnen mit Fasern und/oder Partikeln so hoch gewählt wird, dass über den Kontakt der leitfähigen Fasern und/oder Partikeln untereinander insgesamt eine leitfähige Schicht 3 entsteht. Die Zwischenräume dieser leitfähigen Schicht 3 sind dabei erfindungsgemäß entweder bereits unmittelbar nach der Herstellung der leitfähigen Schicht 3 weitgehend mit Bitumenmasse aufgefüllt und/oder werden im Zuge der baustellenseitigen Verarbeitung von aufgeschmolzenem Bitumen durchdrungen, sobald die obere Dichtungslage nach Erwärmung der Fügezone an die untere Dichtungslage angedrückt wird, wobei erfindungsgemäß vor dem eigentlichen Verklebevorgang wiederum zunächst die leitfähige obere Schicht 3 mit der leitfähigen unteren Schicht 3 kontaktiert, so dass eine im Wesentlichen vollflächige, unterbrechungsfreie leitfähige Schicht in dem Dichtungsaufbau 1 entsteht.

In einer weiteren Ausgestaltung der Erfindung besteht die werkmäßig auf die Bitumenschweißbahnen 2 aufgebrachte leitfähige Schicht 3 aus einer dünnen leitfähigen Kunststofffolie. Wird diese Folie 3 im Zuge der Verarbeitung der Bahnen 2 auf der Baustelle mit der Brennerflamme oder mit Heißgas erhitzt, so wird die Folie zunächst plastifiziert und reißt unter Bildung einer kleinteiligen regelmäßigen oder unregelmäßigen Netzstruktur auf, wobei die in den Netzöffnungen frei liegende Bitumenmasse schmilzt und sich die bereits gerissene Folie weiter zusammenzieht. Auf diese Weise bildet sich auf dem aufgeschmolzenen Bitumen eine leitfähige, stark plastifizierte oder sogar ebenfalls schmelzflüssige Netzstruktur aus elektrisch leitfähigem Kunststoff, die nach dem Erkalten der Fügezone als elektrisch leitfähige Schicht zwischen den beiden miteinander verbundenen Dichtungslagen verbleibt und dort eine im Wesentlichen vollflächige, unterbrechungsfreie elektrisch leitfähige Schicht ausbildet. Werden die insoweit plastifizierten Oberflächen während der Verarbeitung der oberen Dichtungslage in der Fügezone ineinander abgerollt, entsteht erfindungsgemäß einerseits ein vollflächiger Klebeverbund, anderseits eine vollflächig leitfähige Schicht, da die leitfähige Gitterstruktur der oberen Dichtungslage sich in die leitfähige Gitterstruktur der unteren Dichtungslage abrollt und unter Ausbildung einer elektrischen Kontaktierung mit dieser verbindet.

In einer alternativen Ausgestaltung der Erfindung wird eine elektrisch leitfähige Kunststofffolie zur werkseitigen Herstellung der elektrisch leitfähigen Beschichtung (Schichtsegmente) 3 der Bitumenschweißbahnen 2 verwendet, wobei die Beschichtung in einem regelmäßigen und/oder unregelmäßigen Raster Perforationen aufweist mit der Folge, dass bei der Verarbeitung der Bitumenschweißbahnen 2 die Folie 3 unter Einwirkung von Hitze ausgehend von den Perforationsstellen schrumpft, so dass die Ausbildung der leitfähigen Struktur über das Perforationsmuster gesteuert werden kann.

In einer weiteren Ausgestaltung der Erfindung wird die elektrisch leitfähige Kunststofffolie 3 werkmäßig so auf die Bitumenbahnen 2 aufgebracht, dass die Folie 3 nur partiell, zum Beispiel in einer gitterartigen Struktur mit den Bitumenbahnen verbunden ist und in den Gitteröffnungen nicht oder nur leicht an den Bitumenbahnen 2 anhaftet. Dies führt erfindungsgemäß dazu, dass bei Erhitzung im Rahmen der baustellenseitigen Verarbeitung die nicht oder nur geringfügig anhaftenden Folienbereiche bevorzugt reißen und schrumpfen, da die Folie 3 hier die höchste Temperaturbeanspruchung erfährt. Die schrumpfende Folie zieht sich dabei in Richtung der festen Anhaftungsbereiche zurück, weil dort eine gute Wärmeableitung in das darunter liegende Bitumen besteht. Auf diese Weise lässt sich über die gewählte Gitterstruktur die Ausbildung der leitfähigen Schicht im Schichtenaufbau zielgerichtet beeinflussen.

Die Ausführung der Erfindung ist nicht auf die vorstehend beschriebenen und in der Zeichnung dargestellten Ausführungsbeispiele beschränkt. Vielmehr sind zahlreiche Varianten möglich, die auch bei abweichender Gestaltung von der in den beiliegenden Ansprüchen angegebenen Erfindung Gebrauch machen. So kann beispielweise die jeweilige erfindungsgemäße Bitumenschweißbahn nicht nur einen einzigen relativ großen elektrisch leitfähigen Schichtabschnitt aufweisen, sondern mit mehreren kleineren elektrisch leitfähigen Schichtsegmenten versehen sein.

## Patentansprüche

1. Verfahren zur Herstellung eines mehrlagigen Dichtungsaufbaus (1) aus Bitumenschweißbahnen (2) mit elektrisch leitfähiger Innenschicht, **dadurch gekennzeichnet, dass** hierzu Bitumenschweißbahnen verwendet werden, die jeweils werksmäßig mit einer elektrisch leitfähigen Beschichtung (3) versehen sind, die mit Abstand zu mindestens einer der Längskanten (2.1, 2.3) und mindestens einer der Querkanten (2.2, 2.4) der Bitumenschweißbahn (2) endet oder lösbar mit der Bitumenschweißbahn (2) verklebt ist, wobei mindestens ein Querrand (3.2) der lösbar mit der Bitumenschweißbahn (2) verklebten Beschichtung (3) am Einbauort der Bitumenschweißbahnen (2) entfernt wird, so dass die jeweilige Bitumenschweißbahn nicht leitfähige Randstreifen (2.5) als Überlappungs- und Fügebereich für in derselben Dichtungslage anzuordnende benachbarte Bitumenschweißbahnen aufweist, wobei aus solchen Bitumenschweißbahnen (2) eine untere Dichtungslage mit nach oben weisenden elektrisch leitfähigen Beschichtungen (3) gebildet wird, wobei die elektrisch leitfähigen Beschichtungen (3) der die untere Dichtungslage bildenden Bitumenschweißbahnen (2) dadurch elektrisch verbunden werden, dass die Bitumenschweißbahnen, welche die darauf folgende obere Dichtungslage bilden, so auf die untere Dichtungslage aufgebracht werden, dass die elektrisch leitfähigen Beschichtungen (3) der oberen Bitumenschweißbahnen der unteren Dichtungslage zugewandt und relativ zu den unteren Bitumenschweißbahnen (2) so weit längs und/oder quer versetzt angeordnet sind, dass die elektrisch leitfähigen Beschichtungen (3) der jeweils oberen Bitumenschweißbahnen die Verbindungsnähte der unteren Bitumenschweißbahnen überdecken, so dass eine im Wesentlichen vollflächige elektrisch leitfähige Schicht innerhalb des Dichtungsaufbaus entsteht.

2. Verfahren nach Anspruch 1, **dadurch gekennzeichnet, dass** zur Herstellung des Dichtungsaufbaus (1) Bitumenschweißbahnen (2) verwendet werden, die jeweils werksmäßig mit einer elektrisch leitfähigen Beschichtung (3) versehen sind, die eine Vielzahl rasterartig oder unregelmäßig verteilt ausgebildeter Durchbrechungen aufweist oder bei Erhitzung unter Bildung einer unregelmäßigen Netzstruktur aufreißt, so dass in der Beschichtung eine Vielzahl unregelmäßig verteilt ausgebildeter Durchbrechungen entstehen.

3. Verfahren nach Anspruch 2, **dadurch gekennzeichnet, dass** zur Herstellung des Dichtungsaufbaus (1) Bitumenschweißbahnen (2) verwendet werden, die jeweils werksmäßig mit einer elektrisch leitfähigen Beschichtung (3) versehen sind, die aus einem eine Vielzahl von Durchbrechungen aufweisenden elektrisch leitfähigen Flächengebilde besteht.

4. Verfahren nach Anspruch 3, **dadurch gekennzeichnet, dass** das Flächengebilde (3) aus einem elektrisch leitfähigen Vlies, Gewebe und/oder Gitter gebildet wird.

5. Verfahren nach Anspruch 3 oder 4, **dadurch gekennzeichnet, dass** das Flächengebilde (3) werksseitig so auf die jeweilige Bitumenschweißbahn (2) aufgebracht ist, dass zumindest ein Teil der Durchbrechungen mit Bitumenmasse gefüllt ist, ohne dass die der Bitumenschweißbahn (2) abgewandte Seite des Flächengebildes (3) mit Bitumenmasse überdeckt ist.

6. Verfahren nach einem der Ansprüche 3 bis 5, **dadurch gekennzeichnet, dass** das Flächengebilde (3) hinsichtlich Dicke und Durchtränkbarkeit einerseits und die in der Verschweißungszone der Bitumenschweißbahnen (2) verwendete Bitumenmasse andererseits so aufeinander abgestimmt sind, dass eine vollflächige Durchtränkung des Flächengebildes (3) in der Verschweißungszone bei der Herstellung des Dichtungsaufbaus in Folge Erhitzung und Anpressung einer der oberen Bitumenschweißbahnen (2) erreicht wird.

7. Verfahren nach Anspruch 1, **dadurch gekennzeichnet, dass** zur Herstellung des Dichtungsaufbaus (1) Bitumenschweißbahnen (2) verwendet werden, die jeweils werksmäßig mit einer elektrisch leitfähigen Beschichtung (3) versehen sind, die werksmäßig aus auf die jeweilige Bitumenschweißbahn (2) aufgebrachten elektrisch leitfähigen Fasern und/oder elektrisch leitfähigen Partikeln hergestellt ist, wobei die Fasern und/oder Partikel mit der Bitumenschweißbahn (2) thermisch verbunden sind, und wobei die Belegungsdichte der Bitumenschweißbahn mit Fasern und/oder Partikeln so hoch gewählt ist, dass über den Kontakt der elektrisch leitfähigen Fasern und/oder Partikel untereinander insgesamt eine elektrisch leitfähige Schicht entsteht.

8. Verfahren nach Anspruch 1, **dadurch gekennzeichnet, dass** zur Herstellung des Dichtungsaufbaus (1) Bitumenschweißbahnen (2) verwendet werden, die jeweils werksmäßig mit einer elektrisch leitfähigen Beschichtung (3) in Form einer dünnen elektrisch leitfähigen Kunststofffolie versehen sind, die bei der Herstellung des Dichtungsaufbaus in Folge Erhitzung zunächst plastifiziert wird und anschließend unter Bildung einer regelmäßigen oder unregelmäßigen Netzstruktur aufreißt, wobei die in den Netzöffnungen befindliche Bitumenmasse schmilzt.

9. Verfahren nach Anspruch 1 **dadurch gekennzeichnet, dass** zur Herstellung des Dichtungsaufbaus (1) Bitumenschweißbahnen (2) verwendet werden, die jeweils werksmäßig mit einer elektrisch leitfähigen Beschichtung (3) in Form einer elektrisch leitfähigen Kunststofffolie versehen sind, die in einem regelmäßigen Raster oder in unregelmäßiger Verteilung Perforationen aufweist.

10. Verfahren nach Anspruch 9, **dadurch gekennzeichnet, dass** die elektrisch leitfähige Kunststofffolie (3) werksmäßig so auf die Bitumenschweißbahn (2) aufgebracht ist, dass die Kunststofffolie (3) nur partiell in einer gitter- oder rasterartigen Struktur mit der Bitumenschweißbahn (2) verbunden ist und im übrigen Bereich nicht oder nur leicht an der Bitumenschweißbahn (2) haftet.

11. Bitumenschweißbahnen zur Herstellung eines mehrlagigen Dichtungsaufbaus (1), insbesondere einer mehrlagigen Dachhaut eines Gebäudes, umfassend eine elektrisch leitfähige Beschichtung (3) auf der jeweiligen Bitumenschweißbahn (2), **dadurch gekennzeichnet, dass** die elektrisch leitfähige Beschichtung (3) mit Abstand zu mindestens einer der Längskanten (2.1, 2.3) und mindestens einer der Querkanten (2.2, 2.4) der Bitumenschweißbahn (2) endet oder lösbar mit der Bitumenschweißbahn (2) verklebt ist, wobei mindestens ein Querrand (3.2) der lösbar mit der Bitumenschweißbahn (2) verklebten Beschichtung (3) am Einbauort der Bitumenschweißbahnen (2) entfernbar ist, so dass die jeweilige Bitumenschweißbahn nicht leitfähige Randstreifen (2.5) als Überlappungs- und Fügebereich für in derselben Dichtungslage anzuordnende Bitumenschweißbahnen (2) aufweist, und dass die elektrisch leitfähige Beschichtung (3) der jeweiligen Bitumenschweißbahn (2) aus
a) einem eine Vielzahl von Durchbrechungen aufweisenden elektrisch leitfähigen Flächengebilde gebildet ist, wobei das Flächengebilde aus einem elektrisch leitfähigen Vlies, Gewebe und/oder Gitter gebildet ist, oder
b) auf die jeweilige Bitumenschweißbahn (2) aufgebrachten elektrisch leitfähigen Fasern und/oder elektrisch leitfähigen Partikeln hergestellt ist, wobei die Fasern und/oder Partikel mit der Bitumenschweißbahn (2) stoffschlüssig verbunden sind, oder
c) einer dünnen elektrisch leitfähigen Kunststofffolie gebildet ist, die bei der Herstellung des Dichtungsaufbaus (1) in Folge Erhitzung zunächst plastifiziert wird und anschließend unter Bildung einer unregelmäßigen Netzstruktur aufreißt, wobei die in den Netzöffnungen befindliche Bitumenmasse schmilzt, oder
d) einer elektrisch leitfähigen Kunststofffolie gebildet ist, die in einem regelmäßigen Raster oder in unregelmäßiger Verteilung Perforationen aufweist.

12. Bitumenschweißbahnen nach Anspruch 11, **dadurch gekennzeichnet, dass** die elektrisch leitfähige Beschichtung (3) mit Abstand zu beiden Längskanten (2.1, 2.3) und beiden Querkanten (2.2, 2.4) der Bitumenschweißbahn (2) endet, so dass die Bitumenschweißbahn (2) einen umlaufenden, nicht leitfähigen Randstreifen (2.5) als Überlappungsbereich für in derselben Dichtungslage anzuordnende Bitumenschweißbahnen (2) aufweist.

13. Bitumenschweißbahnen nach Anspruch 11 oder 12, **dadurch gekennzeichnet, dass** dann, wenn die elektrisch leitfähige Beschichtung (3) der jeweiligen Bitumenschweißbahn (2) aus einem eine Vielzahl von Durchbrechungen aufweisenden elektrisch leitfähigen Flächengebilde gebildet ist, das aus einem elektrisch leitfähigen Vlies, Gewebe und/oder Gitter gebildet ist, zumindest ein Teil der Durchbrechungen mit Bitumenmasse gefüllt ist, ohne dass die der Bitumenschweißbahn abgewandte Seite des Flächengebildes (3) mit Bitumenmasse überdeckt ist.

14. Bitumenschweißbahnen nach einem der Ansprüche 11 bis 13, **dadurch gekennzeichnet, dass** dann, wenn die elektrisch leitfähige Beschichtung (3) der jeweiligen Bitumenschweißbahn (2) aus einem eine Vielzahl von Durchbrechungen aufweisenden elektrisch leitfähigen Flächengebilde gebildet ist, das aus einem elektrisch leitfähigen Vlies, Gewebe und/oder Gitter gebildet ist, das Flächengebilde (3) hinsichtlich Dicke und Durchtränkbarkeit einerseits und die in der Verschweißungszone der Bitumenschweißbahnen (2) verwendete Bitumenmasse andererseits so aufeinander abgestimmt sind, dass eine vollflächige Durchtränkung des Flächengebildes in der Verschweißungszone bei der Herstellung des Dichtungsaufbaus (1) in Folge Erhitzung und Anpressung einer der oberen Bitumenschweißbahnen (2) erreicht wird.

15. Bitumenschweißbahnen nach Anspruch 11 oder 12, **dadurch gekennzeichnet, dass** dann, wenn die elektrisch leitfähige Beschichtung (3) der jeweiligen Bitumenschweißbahn (2) aus einer elektrisch leitfähigen Kunststofffolie gebildet ist, die in einem regelmäßigen Raster oder in unregelmäßiger Verteilung Perforationen aufweist, die elektrisch leitfähige Kunststofffolie (3) so auf die Bitumenschweißbahn (2) aufgebracht ist, dass die Kunststofffolie (3) nur partiell in einer gitter- oder rasterartigen Struktur mit der jeweiligen Bitumenschweißbahn verbunden ist und im übrigen Bereich nicht oder nur leicht an der Bitumenschweißbahn (2) haftet.

16. Bitumenschweißbahnen nach einem der Ansprüche 11 bis 15, **dadurch gekennzeichnet, dass** zwischen der jeweiligen Bitumenschweißbahn (2) und der darauf aufgebrachten elektrisch leitfähigen Beschichtung (3) eine auf die Bitumenschweißbahn (2) vollflächig aufkaschierte Kunststofffolie als Schutzfolie (4) angeordnet ist.

## Claims

1. Method for producing a multilayer sealing assembly (1) from weldable bitumen sheets (2) having an electrically conductive inner layer, **characterised in that**, for this purpose, weldable bitumen sheets are used which, at the factory, are each provided with an electrically conductive coating (3) which ends at a distance from at least one of the longitudinal edges (2.1, 2.3) and at least one of the transverse edges (2.2, 2.4) of the weldable bitumen sheet (2) or is detachably bonded to the weldable bitumen sheet (2), at least one transverse side (3.2) of the coating (3), which is detachably bonded to the weldable bitumen sheet (2), being removed at the installation site of the weldable bitumen sheets (2) so that each weldable bitumen sheet comprises non-conductive side strips (2.5) as an overlap and joining region for adjacent weldable bitumen sheets to be arranged in the same sealing layer, a lower sealing layer, which comprises upwardly pointing electrically conductive coatings (3), being formed from weldable bitumen sheets (2) of this type, the electrically conductive coatings (3) of the weldable bitumen sheets (2) which form the lower sealing layer being electrically connected **in that** the weldable bitumen sheets which form the consecutive upper sealing layer are applied to the lower sealing layer in such a way that the electrically conductive coatings (3) of the upper weldable bitumen sheets are arranged facing the lower sealing layer and longitudinally and/or transversely offset relative to the lower weldable bitumen sheets (2) to such an extent that the electrically conductive coatings (3) of each of the upper weldable bitumen sheets cover the connection seams of the lower weldable bitumen sheets, thus resulting in a substantially full-surface electrically conductive layer within the sealing assembly.

2. Method according to claim 1, **characterised in that** in order to produce the sealing assembly (1), weldable bitumen sheets (2) are used which, at the factory, are each provided with an electrically conductive coating (3) which has a plurality of perforations which are formed in a grid-like or irregularly distributed manner or which tears during heating to form an irregular net structure, thus resulting in a plurality of perforations in the coating which are formed in an irregularly distributed manner.

3. Method according to claim 2, **characterised in that** in order to produce the sealing assembly (1), weldable bitumen sheets (2) are used which, at the factory, are each provided with an electrically conductive coating (3) which consists of an electrically conductive fabric having a plurality of perforations.

4. Method according to claim 3, **characterised in that** the fabric (3) is made of an electrically conductive nonwoven fabric, woven fabric and/or mesh.

5. Method according to either claim 3 or claim 4, **characterised in that** the fabric (3) is applied at the factory to each weldable bitumen sheet (2) in such a way that at least some of the perforations are filled with bitumen compound, without the side of the fabric (3) facing away from the weldable bitumen sheet (2) being covered with bitumen compound.

6. Method according to any of claims 3 to 5, **characterised in that** the thickness and saturability of the fabric (3) on the one hand, and the bitumen compound used in the welding zone of the weldable bitumen sheets (2) on the other hand are coordinated in such a way that full-surface saturation of the fabric (3) in the welding zone is achieved during the production of the sealing assembly, as a result of heating and pressing one of the upper weldable bitumen sheets (2).

7. Method according to claim 1, **characterised in that** in order to produce the sealing assembly (1), weldable bitumen sheets (2) are used which, at the factory, are each provided with an electrically conductive coating (3), which is produced at the factory from electrically conductive fibres and/or electrically conductive particles which are applied to each weldable bitumen sheet (2), the fibres and/or particles being thermally bonded to the weldable bitumen sheet (2), and the surface density of the weldable bitumen sheet, comprising fibres and/or particles, being selected to be so high that the overall contact between the electrically conductive fibres and/or particles results in an electrically conductive layer.

8. Method according to claim 1, **characterised in that** in order to produce the sealing assembly (1), weldable bitumen sheets (2) are used which, at the factory, are each provided with an electrically conductive coating (3) in the form of an thin electrically conductive plastics film, which, during the production of the sealing assembly, is firstly plasticised as a result of heating, and subsequently tears to form a regular or irregular net structure, the bitumen compound located in the net openings melting.

9. Method according to claim 1, **characterised in that** in order to produce the sealing assembly (1), weldable bitumen sheets (2) are used, which, at the factory, are each provided with an electrically conductive coating (3) in the form of an electrically conductive plastics film, which has perforations which are in a regular grid or are distributed irregularly.

10. Method according to claim 9, **characterised in that** the electrically conductive plastics film (3) is applied to the weldable bitumen sheet (2) at the factory in such a way that the plastics film (3) is connected only in part to the weldable bitumen sheet (2) in a mesh- or grid-type structure, and in the remaining region is does not adhere to, or only slightly adheres to the weldable bitumen sheet (2).

11. Weldable bitumen sheets for the production of a multilayer sealing assembly (1), in particular of a multilayer roof membrane of a building, comprising an electrically conductive coating (3) on each weldable bitumen sheet (2), **characterised in that** the electrically conductive coating (3) ends at a distance from at least one of the longitudinal edges (2.1, 2.3) and at least one of the transverse edges (2.2, 2.4) of the weldable bitumen sheet (2) or is detachably bonded to the weldable bitumen sheet (2), at least one transverse side (3.2) of the coating (3) which is detachably bonded to the weldable bitumen sheet (2) being able to be removed at the installation site of the weldable bitumen sheets (2) so that each weldable bitumen sheet comprises non-conductive side strips (2.5) as an overlap and joining region for weldable bitumen sheets (2) to be arranged in the same sealing layer, and **in that** the electrically conductive coating (3) of each weldable bitumen sheet (2)
a) is formed from an electrically conductive fabric having a plurality of perforations, the fabric being made of an electrically conductive nonwoven fabric, woven fabric and/or mesh, or
b) is produced from electrically conductive fibres and/or electrically conductive particles which are applied to each weldable bitumen sheet (2), the fibres and/or particles being integrally bonded to the weldable bitumen sheet (2), or
c) is formed from a thin electrically conductive plastics film, which, during the production of the sealing assembly (1), is firstly plasticised as a result of heating, and subsequently tears to form an irregular net structure, the bitumen compound located in the net openings melting, or
d) is formed from an electrically conductive plastics film which has perforations which are in a regular grid or are distributed irregularly.

12. Weldable bitumen sheets according to claim 11, **characterised in that** the electrically conductive coating (3) ends at a distance from the two longitudinal edges (2.1, 2.3) and the two transverse edges (2.2, 2.4) of the weldable bitumen sheet (2) so that the weldable bitumen sheet (2) has a peripheral, non-conductive side strip (2.5) as an overlap region for weldable bitumen sheets (2) to be arranged in the same sealing layer.

13. Weldable bitumen sheets according to either claim 11 or claim 12, **characterised in that** when the electrically conductive coating (3) of each bitumen sheet (2) is formed from an electrically conductive fabric which has a plurality of perforations and is made from an electrically conductive nonwoven fabric, woven fabric and/or a mesh, at least some of the perforations are filled with bitumen compound, without the side of the fabric (3) facing away from the weldable bitumen sheet being covered with bitumen compound.

14. Weldable bitumen sheets according to any of claims 11 to 13, **characterised in that** when the electrically conductive coating (3) of each weldable bitumen sheet (2) is formed from an electrically conductive fabric which has a plurality of perforations and is made from an electrically conductive nonwoven fabric, woven fabric and/or mesh, the thickness and saturability of the fabric (3) on the one hand, and the bitumen compound used in the welding zone of the weldable bitumen sheets (2) on the other hand are coordinated in such a way that full-surface saturation of the fabric in the welding zone is achieved during the production of the sealing assembly (1), as a result of heating and pressing one of the upper weldable bitumen sheets (2).

15. Weldable bitumen sheets according to either claim 11 or claim 12, **characterised in that** when the electrically conductive coating (3) of each weldable bitumen sheet (2) is formed from an electrically conductive plastics film which has perforations which are in a regular grid or are distributed irregularly, the electrically conductive plastics film (3) is applied to the weldable bitumen sheet (2) in such a way that the plastics film (3) is connected only in part to each weldable bitumen sheet in a mesh- or grid-type structure, and in the remaining region does not adhere to, or only slightly adheres to the weldable bitumen sheet (2).

16. Weldable bitumen sheets according to any of claims 11 to 15, **characterised in that** a plastics film which is mounted over the whole surface of the weldable bitumen sheet (2) as a protective film (4) is arranged between each weldable bitumen sheet (2) and the electrically conductive coating (3) applied thereto.

## Revendications

1. Procédé de fabrication d'une structure d'étanchéité multicouche (1) à partir de bandes bitumeuses soudables (2) avec une couche intérieure électroconductrice,
**caractérisé en ce que** les bandes bitumeuses soudables employées sont respectivement pourvues en usine d'un revêtement électroconducteur (3) qui se termine à distance d'au moins l'un des bords longitudinaux (2.1, 2.3) et d'au moins l'un des bords transversaux (2.2, 2.4) de la bande bitumeuse soudable (2) ou est relié par collage, de manière amovible, à la bande bitumeuse soudable (2), sachant qu'au moins un bord transversal (3.2) du revêtement électroconducteur (3) relié par collage à la bande bitumeuse soudable (2) est enlevé au lieu d'agencement des bandes bitumeuses soudables (2) de sorte que chaque bande bitumeuse soudable présente des bandes marginales (2.5) non électroconductrices en tant que zones de chevauchement et de jointoiement pour les bandes bitumeuses soudables voisines devant être agencées dans la même couche d'étanchéité, sachant que l'on forme à partir de telles bandes bitumeuses soudables (2) une couche d'étanchéité inférieure avec des revêtements électroconducteurs (3) dirigés vers le haut, sachant que les revêtements électroconducteurs (3) des bandes bitumeuses soudables (2), qui forment la couche d'étanchéité inférieure, sont ainsi reliés électriquement, que les bandes bitumeuses soudables, qui forment la couche d'étanchéité supérieure, suivante, sont appliquées sur la couche d'étanchéité inferieure de telle manière que les revêtements électroconducteurs (3) des bandes bitumeuses soudables supérieures soient dirigés vers la couche d'étanchéité inférieure et décalés longitudinalement et / ou transversalement par rapport aux bandes bitumeuses soudables (2) inférieures dans une mesure telle que les revêtements électroconducteurs (3) des bandes bitumeuses soudables supérieures, respectives recouvrent les liaisons des bandes bitumeuses soudables (2) inférieures de sorte qu'une couche électroconductrice soit formée à l'intérieur de la structure d'étanchéité, sensiblement sur toute la surface.

2. Procédé selon la revendication 1,
**caractérisé en ce que**, pour la fabrication de la structure d'étanchéité (1), on utilise des bandes bitumeuses soudables (2) qui sont respectivement pourvues en usine d'un revêtement électroconducteur (3) qui est doté de nombreux jours agencés à la manière d'un réseau ou répartis irrégulièrement ou qui, lors de la chauffe, se déchire en formant une structure réticulaire irrégulière, de telle manière que de nombreux jours irrégulièrement répartis se forment dans le revêtement.

3. Procédé selon la revendication 2,
**caractérisé en ce que**, pour la fabrication de la structure d'étanchéité (1), on utilise des bandes bitumeuses soudables (2) qui sont pourvues en usine d'un revêtement électroconducteur (3) qui consiste en un structure plate électroconductrice qui est dotée d'un grand nombre de jours.

4. Procédé selon la revendication 3,
**caractérisé en ce que** la structure plate (3) est réalisée en non tissé, en tissu et / ou en grillage.

5. Procédé selon les revendications 3 ou 4,
**caractérisé en ce que** la structure plate (3) est appliquée en usine sur chaque bande bitumeuse soudable (2) de telle manière qu'au moins une partie des jours soit remplis de masse bitumeuse sans que la face de la structure plate (3) opposée à la bande bitumeuse soudable (2) soit recouverte de masse bitumeuse.

6. Procédé selon l'une des revendications 3 à 5,
**caractérisé en ce que**, dans la structure plate (3), l'épaisseur et l'aptitude à l'imbibition, d'une part, et la masse bitumeuse utilisée dans la zone de soudure des bandes bitumeuses soudables (2), d'autre part, sont adaptées les unes aux autres de manière à ce que, lors de la fabrication de la structure d'étanchéité, on obtienne, dans la zone de soudure, une imbibition de toute la surface de la structure plate (3) à la suite du chauffage et de la compression de l'une des bandes bitumeuses soudables (2) supérieures.

7. Procédé selon la revendication 1,
**caractérisé en ce que**, pour la fabrication de la structure d'étanchéité (1), on utilise des bandes bitumeuses soudables (2) qui sont respectivement pourvues en usine d'un revêtement (3) électroconducteur qui est fabriqué en usine à partir de fibres électroconductrices et / ou de particules électroconductrices qui sont appliquées sur chaque bande bitumeuse soudable (2), sachant que lesdites fibres et / ou particules sont liées thermiquement avec la bande bitumeuse soudable (2) et sachant que l'application de fibres et / ou des particules sur la bande bitumineuse soudable est si dense que, lors de l'entrée en contact des fibres et / ou des particules électroconductrices entre elles, une couche électroconductrice soit formée dans l'ensemble.

8. Procédé selon la revendication 1
**caractérisé en ce que**, pour la fabrication de la structure d'étanchéité (1), on utilise des bandes bitumeuses soudables (2) qui sont respectivement pourvues en usine d'un revêtement électroconducteur (3) qui est formé par une feuille de matière synthétique électroconductrice (3) mince, qui, lors de la fabrication de la structure d'étanchéité, est tout d'abord plastifiée sous l'effet de la chauffe et qui se déchire ensuite en formant une structure réticulaire régulière ou irrégulière, la masse bitumeuse, présente dans les ouvertures du réseau, fondant alors.

9. Procédé selon la revendication 1,
**caractérisé en ce que**, pour la fabrication de la structure d'étanchéité (1), on utilise des bandes bitumeuses soudables (2) qui sont respectivement pourvues en usine d'un revêtement électroconducteur (3) qui est formé par une feuille de matière synthétique électroconductrice, qui est dotée de perforations agencées en réseau régulier ou réparties irrégulièrement.

10. Procédé selon la revendication 9,
**caractérisé en ce que** la feuille de matière synthétique électroconductrice (3) est appliquée en usine sur la bande bitumeuse soudable (2) de telle manière que ladite feuille de matière synthétique électroconductrice (3) soit reliée seulement partiellement en forme de structure grillagée ou réticulaire à la bande bitumeuse soudable (2) et que le reste n'adhère pas ou seulement légèrement à ladite bande bitumeuse soudable (2).

11. Bandes bitumeuses soudables destinées à la fabrication d'une structure d'étanchéité multicouche (1) multicouche, en particulier d'une couverture de toit à plusieurs couches pour un bâtiment, comprenant un revêtement électroconducteur (3) sur la bande bitumeuse soudable (2) respective,
**caractérisées en ce que** le revêtement électroconducteur (3) se termine à distance d'au moins l'un des bords longitudinaux (2.1, 2.3) et d'au moins l'un des bords transversaux (2.2, 2.4) de la bande bitumeuse soudable (2) ou est relié, de manière amovible, à la bande bitumeuse soudable (2) par collage, sachant qu'au moins un bord transversal (3.2) du revêtement électroconducteur (3), relié à la bande bitumeuse soudable (2) par collage, est enlevé au lieu d'agencement des bandes bitumeuses soudables (2) de sorte que la bande bitumeuse soudable respective présente des bandes marginales (2.5) non électroconductrices en tant que zones de chevauchement et de jointoiement pour les bandes bitumeuses soudables devant être agencées dans la même couche d'étanchéité, et que le revêtement électroconducteur (3) de la bande bitumeuse soudable (2) respective
a) est formé par une structure plate qui est dotée d'un grand nombre de jours et qui est réalisée en non tissé, en tissu et / ou en forme de grille; ou
b) est formé par des fibres et / ou des particules électroconductrices appliquées sur la bande bitumeuse soudable (2) respective, sachant que à partir les fibres et / ou les particules électroconductrices sont reliées par fusion de matière à la bande bitumeuse soudable (2); ou
c) est formé par une feuille de matière synthétique électroconductrice, mince, qui, lors de la fabrication de la structure d'étanchéité (1), est tout d'abord plastifiée sous l'effet de la chauffe et qui se déchire ensuite en formant une structure réticulaire irrégulière, la masse bitumeuse, présente dans les ouvertures du réseau, fondant alors; ou
d) est formé par une feuille de matière synthétique qui est doté de perforations disposées en forme de réseau régulier ou réparties irrégulièrement.

12. Bandes bitumeuses soudables selon la revendication 11,
**caractérisées en ce que** le revêtement électroconducteur (3)se termine à distance des deux bords longitudinaux (2.1, 2.3) et des deux bords transversaux (2.2, 2.4) de la bande bitumeuse soudable (2) de telle manière que la bande bitumeuse soudable (2) présente une bande marginale, périphérique, non conductrice (2.5) en tant que zone de chevauchement pour des bandes bitumineuses soudables (2) devant être agencées dans la même couche d'étanchéité.

13. Bandes bitumeuses soudables selon revendication 11 ou 12,
**caractérisées en ce que**, quand le revêtement électroconducteur (3) de la bande bitumeuse soudable (2) respective est formé par une structure plate en non tissé, en tissu et / ou en forme de grille, dotée d'un grand nombre de jours, au moins une partie des jours est remplis de masse bitumeuse sans que la face de la structure plate (3) opposée à la bande bitumeuse soudable soit recouverte de masse bitumeuse.

14. Bandes bitumeuses soudables selon l'une des revendications 11 à 13,
**caractérisées en ce que**, quand le revêtement électroconducteur (3) de la bande bitumeuse soudable (2) respective est formé par une structure plate en non tissé, en tissu et / ou en forme de grille, dotée d'un grand nombre de jours, l'épaisseur et l'aptitude à l'imbibition, d'une part, et la masse bitumeuse utilisée dans la zone de soudure des bandes bitumeuses soudables (2), d'autre part, sont adaptées les unes aux autres de manière à ce que, lors de la fabrication de la structure d'étanchéité (1), on obtienne, dans la zone de soudure, une imbibition de toute la surface de la structure plate (3) à la suite du chauffage et de la compression de l'une des bandes bitumeuses soudables (2) supérieures.

15. Bandes bitumeuses soudables selon revendication 11 ou 12,
**caractérisées en ce que**, quand le revêtement électroconducteur (3) de la bande bitumeuse soudable (2) respective est formé par une feuille en matière synthétique électroconductrice qui est dotée de perforations disposées en réseau régulier ou réparties irrégulièrement, la feuille de matière synthétique électroconductrice (3) est appliquée sur la bande bitumeuse soudable (2) de telle manière que ladite feuille de matière synthétique (3) soit reliée seulement partiellement, en une structure en forme de grille ou de réseau, à la bande bitumeuse soudable respective et n'adhère pas ou que légèrement à la bande bitumeuse soudable (2) dans les régions restantes.

16. Bandes bitumeuses soudables selon l'une des revendications 11 à 15,
**caractérisées en ce que**, entre chaque bande bitumeuse soudable (2) et le revêtement électroconducteur (3) appliqué sur celle-ci, une feuille de matière synthétique, recouvrant toute la surface de la bande bitumeuse soudable (2), est disposée, en tant que feuille protectrice.
